# EUROPÄISCHE PATENTSCHRIFT

(11) **EP 3 526 042 B1**
(45) Veröffentlichungstag und Bekanntmachung des Hinweises auf die Patenterteilung: **27.05.2020**
(21) Anmeldenummer: 18769040.9
(22) Anmeldetag: 22.08.2018
(51) Int. Cl.: B32B 37/00, B32B 37/08, B32B 37/06, B32B 37/12, B32B 37/04, B32B 37/20, B32B 41/00

(54) **VORRICHTUNG ZUM KASCHIEREN EINES SUBSTRATES MIT EINEM THERMOPLASTISCHEN BESCHICHTUNGSMATERIAL**
DEVICE FOR LAMINATING A SUBSTRATE WITH A THERMOPLASTIC COATING MATERIAL
DISPOSITIF POUR CONTRE-COLLER UN MATÉRIAU DE REVÊTEMENT THERMOPLASTIQUE SUR UN SUBSTRAT

(30) Priorität: 25.08.2017 DE 102017119576
(43) Veröffentlichungstag der Anmeldung: 21.08.2019
(73) Patentinhaber: Klomfass Gierlings & Partner GBR (vertretungsberechtigter Gesellschaftler Michael Gierlings, Marderweg 6, 41564 Kaarst), 40213 Düsseldorf (DE)
(72) Erfinder: GIERLINGS, Michael, 41564 Kaarst (DE); KLOMFASS, Thorsten-Derrick, 40213 Düsseldorf (DE)
(74) Vertreter: Schneiders & Behrendt PartmbB Rechtsanwälte - Patentanwälte
(86) Internationale Anmeldenummer: PCT/EP2018/072604
(87) Internationale Veröffentlichungsnummer: WO 2019/038311

(56) Entgegenhaltungen:
- WO-A1-2017/004613
- WO-A1-2017/026346
- DE-A1-102010 040 059
- US-A- 4 069 081

## Beschreibung

Die Erfindung betrifft eine Vorrichtung zum kontinuierlichen Kaschieren eines Substrates mit einem thermoplastischen Beschichtungsmaterial, mit einer IR-Heizvorrichtung, mit welcher die Oberfläche des thermoplastischen Beschichtungsmaterials angeschmolzen wird, einer der Heizeinrichtung gegenüberliegenden Kühleinrichtung, welche die der angeschmolzenen Oberfläche gegenüberliegende Oberfläche des durchlaufenden thermoplastischen Materials aktiv kühlt, und mindestens einer Pressrollenanordnung, mit welcher eine durchlaufende Substratbahn und die durchlaufende thermoplastische Folienbahn zur Herstellung einer Verbindung zwischen der Substratbahn und dem thermoplastischen Material zusammengepresst werden.

Die mit solchen Vorrichtungen hergestellten Laminate sind insbesondere für die Herstellung von Hygieneartikeln, Folien für die Lebensmittelverpackung, Baufolien, Agrarfolien und anderen technischen Laminaten vorteilhaft, weil bei deren Herstellung kein Klebstoff verwendet wird oder eine erhebliche Reduzierung der verwendeten Klebstoffmenge möglich ist. Als Substrate für Hygieneartikel kommen insbesondere Vliese, aber auch gewebte oder gewirkte Flächengebilde sowie dünne Schaumstoffbahnen infrage. Für andere Anwendungen können auch andere Substrate aus z.B. thermoplastischen Kunststoffen wie PE, CPP, etc, verwendet werden.

Eine Vorrichtung der eingangs genannten Art ist beispielsweise aus der DE 10 2013 001 826 A1 bekannt. Bei dieser bekannten Vorrichtung ist die Kühleinrichtung als feststehendes Kühlblech ausgebildet, über welches die durchlaufende thermoplastische Folienbahn geführt wird und welches die Folienbahn von unten her kühlt, während sie gleichzeitig von oben her mittels der Heizeinrichtung angeschmolzen wird. Ein Problem bei dieser vorbekannten Vorrichtung besteht darin, dass die durchlaufende Folienbahn infolge des Anschmelzens ihrer Oberfläche und trotz der Kühlung ihrer gegenüberliegenden Oberfläche verhältnismäßig instabil ist. Infolgedessen besteht die Gefahr, dass die unter Zugspannung stehende thermoplastische Folienbahn sich vor Erreichen der Pressrollenanordnung verzieht, sodass im Endprodukt entsprechende Unregelmäßigkeiten entstehen.

Ein im Prinzip ähnliches Problem ergibt sich bei einer weiterhin nach dem Stand der Technik (WO 2016/026918A1) bekannten Vorrichtung, die allerdings mit Klebstoff arbeitet, aber ebenfalls eine Aktivierung der Oberfläche der aufzuklebenden thermoplastischen Folienbahn durch Anschmelzen von deren Oberfläche vorsieht. Bei dieser vorbekannten Vorrichtung ist zwischen dem feststehenden Kühlblech und der zu kühlenden thermoplastischen Folie ein um Walzen umlaufendes, stützendes Förderband angeordnet. Dieses stützende Förderband beeinträchtigt allerdings die Kühlwirkung der Kühleinrichtung erheblich und gibt der durchlaufenden thermoplastischen Folienbahn im Bereich vor der Presswalzenanordnung ebenfalls nicht genug Halt. Ein gleichmäßiges Anschmelzen der Folienbahn ist bei dieser Vorrichtung auch nicht so wichtig, weil zusätzlich ausreichend Klebstoff verwendet werden kann.

Um die durch die Kühlung verursachten Probleme zu eliminieren, versucht die aus der EP 3 098 060 A1 bekannte Vorrichtung das Anschmelzen der Oberfläche der durchlaufenden thermoplastischen Folienbahn ohne jede Kühlung der gegenüberliegenden Oberfläche zu bewerkstelligen. Um dies zu ermöglichen, wird zum Anschmelzen der Oberfläche hier ein IR-Laser verwendet und auf eine Kühlung der gegenüberliegenden Oberfläche vollständig verzichtet. Auch bei dieser Vorrichtung besteht natürlich die Gefahr, dass die unter Zugspannung stehende, an ihrer Oberfläche angeschmolzene und deshalb geschwächte thermoplastische Folienbahn sich vor dem Eintritt in die Pressrollenanordnung verzieht. Darüber hinaus ist es nicht einfach, die stark fokussierte Energie eines Laserstrahls gleichmäßig über die Oberfläche der durchlaufenden thermoplastischen Folienbahn zu verteilen, insbesondere wenn man berücksichtigt, dass diese Folienbahn mit Geschwindigkeiten bis zu 350 m/min durchläuft. Somit ergibt sich die Gefahr, dass aufgrund unterschiedlicher Wärmedehnungen im Flächenbereich der Folienbahn Unregelmäßigkeiten entstehen oder dass die thermoplastische Folienbahn örtlich nur unzureichend an dem Substrat haftet.

Eine Vorrichtung zum kontinuierlichen Kaschieren eines Substrates mit einem thermoplastischen Beschichtungsmaterial ist aus dem Dokument WO2017026346 A bekannt.

Es ist deshalb Aufgabe der Erfindung, die Vorrichtung der eingangs genannten Art dahingehend weiterzubilden, dass sich das thermoplastische Beschichtungsmaterial vor dem Eintritt in die Pressrollenanordnung nicht verzieht und eine gleichmäßige Haftung des thermoplastischen Beschichtungsmaterials an der Substratbahn sichergestellt wird.

Zur Lösung dieser Aufgabe schlägt die Erfindung ausgehend von einer Vorrichtung der eingangs genannten Art vor, dass die Kühleinrichtung als drehend angetriebene Kühlwalze ausgebildet ist, um deren Umfang herum in der nachfolgend angegebenen Reihenfolge aufeinanderfolgend angeordnet sind:
- eine Zuführeinrichtung für das thermoplastische Beschichtungsmaterial,
- ein oder mehrere IR-Heizstrahler für die Erwärmung der Oberfläche des auf der Kühlwalze aufliegenden thermoplastischen Beschichtungsmaterials,
- eine Zuführeinrichtung für die Substratbahn,
- eine oder mehrere Pressrollenanordnungen zum Anpressen der Substratbahn gegen die angeschmolzene Oberfläche des auf der Kühlwalze aufliegenden thermoplastischen Beschichtungsmaterials
- und eine Abführeinrichtung für das fertig kaschierte Produkt.

Bei der Vorrichtung gemäß der Erfindung liegt das thermoplastische Beschichtungsmaterial während der gesamten Zeit zwischen der Zuführung zur Kühlwalze und der Abführung des fertig kaschierten Produktes von der Kühlwalze vollflächig, unbeweglich und damit absolut spannungsfrei an der Oberfläche der drehend angetriebene Kühlwalze an, sodass keinerlei Verzerrungen oder Verschiebungen auftreten können. Dadurch, dass das Anschmelzen der Oberfläche des thermoplastischen Beschichtungsmaterials über einen verhältnismäßig großen Winkelweg entlang dem Umfang der Kühlwalze erfolgen kann, ist auch bei hoher Bahngeschwindigkeit ein sehr gleichmäßiges Erwärmen der anzuschmelzenden Oberfläche erreichbar.

Besonders vorteilhaft ist es, wenn entlang des Umfanges der Kühlwalze in Drehrichtung hinter der Zuführungseinrichtung für die Substratbahn mehrere Pressrollenanordnungen zum Anpressen der Substratbahn gegen die angeschmolzene Oberfläche des auf der Kühlwalze liegenden thermoplastischen Beschichtungsmaterials eingesetzt werden. Hierdurch kann man nämlich den Anpressdruck von einer Pressrollenanordnung zur nächsten allmählich steigern, was zu einer Verbesserung der Klebeverbindung führt.

Eine zweckmäßige Ausgestaltung der Vorrichtung gemäß der Erfindung sieht vor, dass die Kühlwalze mit Anschlüssen zur Zuleitung und Ableitung eines flüssigen Kühlmittels versehen ist. Durch eine entsprechende Temperierung dieses flüssigen Kühlmittels ist es möglich, die Oberflächentemperatur der Kühlwalze exakt konstant zu halten.

Zweckmäßig ist es weiterhin, wenn einerseits das Anschmelzen des thermoplastischen Beschichtungsmaterials und andererseits das Anpressen der Substratbahn gegen das angeschmolzene Beschichtungsmaterial jeweils über den halben Umfang der Kühlwalze erfolgen. Dies wird dadurch erreicht, dass einerseits die IR-Heizstrahler und andererseits die Pressrollenanordnungen jeweils über den halben Umfang der Kühlwalze verteilt angeordnet sind. Hierdurch steht auch bei hoher Bahngeschwindigkeit für beide Vorgänge ausreichend Zeit zur Verfügung.

Zur weiteren Absicherung des thermoplastischen Beschichtungsmaterials an der Oberfläche der Kühlwalze gegen unbeabsichtigte Verschiebungen ist weiterhin vorgesehen, dass über den Umfang der Kühlwalze entlang der Seitenkanten der thermoplastischen Folienbahn Fixiervorrichtungen vorgesehen sind, welche den Seitenrand der thermoplastischen Folienbahn über den Umfang der Kühlwalze fixieren.

Die zuletzt genannten Fixiervorrichtungen können beispielsweise als Kluppen oder Führungsbänder ausgebildet sein.

Für den Fall, dass die oben diskutierte Schmelzverklebung für nicht ausreichend erachtet wird, kann schließlich die Zuführeinrichtung für die Substratbahn zusätzlich mit einer Klebstoffzuführung versehen werden.

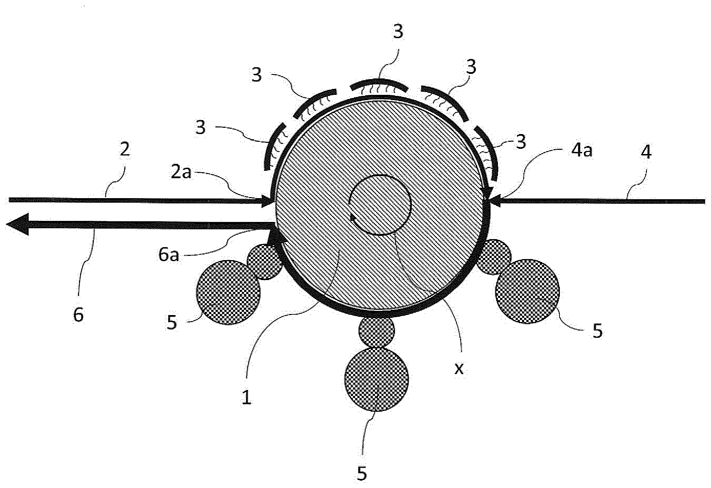

Ein Ausführungsbeispiel der Erfindung wird im Folgenden anhand der Zeichnung näher erläutert, in deren einziger Figur schematisch ein Schnitt durch die Vorrichtung gemäß der Erfindung dargestellt ist.

In der Zeichnung ist eine Kühlwalze mit dem Bezugszeichen 1 bezeichnet. Diese Kühlwalze ist mit nicht dargestellten Anschlüssen für die Zuleitung und Ableitung einer Kühlflüssigkeit, zum Beispiel Wasser oder Öl, versehen und kann mittels dieser Kühlflüssigkeit auf einer konstanten Temperatur, von zum Beispiel 5 °C bis 40 °C, gehalten werden.

Die Kühlwalze 1 ist in Richtung des Drehpfeiles x drehend angetrieben. Um die Kühlwalze herum sind in Richtung des Drehpfeiles x aufeinanderfolgend angeordnet:
- Eine Zuführeinrichtung 2a für ein thermoplastische Beschichtungsmaterial in Form einer Folienbahn 2,
- mehrere IR-Heizstrahler 3 für die Erwärmung der Oberfläche der auf der Kühlwalze 1 aufliegenden thermoplastischen Folienbahn 2,
- eine Zuführeinrichtung 4a für eine Substratbahn 4, wobei diese Zuführeinrichtung 4a erforderlichenfalls zusätzlich mit einer Klebstoffzuführeinrichtung (nicht dargestellt) versehen sein kann,
- drei Pressrollenanordnungen 5 zum Anpressen der Substratbahn 4 gegen die angeschmolzene Oberfläche der auf der Kühlwalze 1 aufliegenden thermoplastischen Folienbahn 2
- und eine Abführeinrichtung 6a für das kaschierte Endprodukt 6, welches aus der Substratbahn 4 und der aufkaschierten thermoplastischen Folienbahn 2 besteht.

Die Vorrichtung gemäß der Erfindung arbeitet wie folgt:
Die zentral angeordnete Kühlwalze 1 wird in Richtung des Drehpfeiles x drehend angetrieben. Über die Zuführeinrichtung 2a wird der Oberfläche der Kühlwalze 1 die durchlaufende thermoplastische Folienbahn 2 zugeführt. Anschließend wird die zugeführte thermoplastische Folienbahn 2 von der sich drehenden Kühlwalze 1 an den IR-Heizstrahlern 3, die etwa über den halben Umfang der Kühlwalze 1 angeordnet sind, vorbeigeführt. Dabei erwärmt sich die den Heizstrahler 3 zugewandte Oberfläche der Folienbahn 2 bis über die Schmelztemperatur. Die an der Kühlwalze 1 anliegende Oberfläche der thermoplastischen Folienbahn 2 schmilzt demgegenüber nicht und bleibt intakt. Damit die thermoplastische Folienbahn 2 auf ihrem Weg entlang der Heizstrahler 3 sich relativ zur Oberfläche der Kühlwalze 1 nicht verschieben kann, wird sie auf diesem Weg von Kluppen, die sich im Bereich ihrer Seitenränder befinden (in der Zeichnung nicht dargestellt), an der Kühlwalze fixiert.

Hinter dem letzten Heizstrahler 3 wird mittels der Zuführeinrichtung 4a die Substratbahn 4 zugeführt und danach mithilfe der Pressrollenanordnungen 5 gegen die angeschmolzene Oberfläche der auf der Kühlwalze 1 aufliegenden thermoplastischen Folienbahn 2 angepresst. Die Pressrollenanordnungen 5 sind über den verbleibenden halben Umfang der Kühlwalze 1 verteilt angeordnet und steigern den erzeugten Anpressdruck von einer Pressrollenanordnung 3 zur nächsten. Hierdurch wird die Qualität der Verklebung erheblich gesteigert.

Hinter der letzten Pressrollenanordnung 5 befindet sich dann die Abführeinrichtung 6a für das fertig kaschierte Produkt 6, welches hier in Form einer endlosen Produktbahn bestehend aus Substratbahn und aufkaschierter thermoplastischer Folienbahn besteht.

## Patentansprüche

1. Vorrichtung zum kontinuierlichen Kaschieren eines Substrates mit einem thermoplastischen Beschichtungsmaterial (2), mit einer IR-Heizvorrichtung (3), mit welcher eine Oberfläche des thermoplastischen, folienförmigen Beschichtungsmaterials (2) angeschmolzen wird, einer der IR-Heizeinrichtung (3) gegenüberliegenden Kühleinrichtung (1), welche die der angeschmolzenen Oberfläche gegenüberliegende Oberfläche des durchlaufenden thermoplastischen Beschichtungsmaterials (2) aktiv kühlt, und mindestens einer Pressrollenanordnung (5), mit welcher eine durchlaufende Substratbahn (4) und das durchlaufende thermoplastische Beschichtungsmaterial (2) zur Herstellung einer Schmelzklebeverbindung zwischen der Substratbahn (4) und dem thermoplastischen Beschichtungsmaterial (2) zusammengepresst werden,
**dadurch gekennzeichnet,**
**dass** die Kühleinrichtung als drehend angetriebene Kühlwalze (1) ausgebildet ist, um deren Umfang herum in der nachfolgend angegebenen Reihenfolge aufeinanderfolgend angeordnet sind:
- eine Zuführeinrichtung (2a) für das thermoplastische Beschichtungsmaterial (2),
- einer oder mehrere IR-Heizstrahler (3) für die Erwärmung der Oberfläche des auf der Kühlwalze aufliegenden thermoplastischen Beschichtungsmaterials (2),
- eine Zuführeinrichtung (4a) für die Substratbahn (4),
- eine oder mehrere Pressrollenanordnungen (5) zum Anpressen der Substratbahn (4) gegen die angeschmolzene Oberfläche des auf der Kühlwalze (1) liegenden thermoplastischen Beschichtungsmaterials (2),
- und eine Abführeinrichtung (6a) für das kaschierte Produkt (6).

2. Vorrichtung nach Anspruch 1, **dadurch gekennzeichnet, dass** die Kühlwalze (1) mit Anschlüssen zur Zuleitung und Ableitung eines fluiden Kühlmittels versehen ist.

3. Vorrichtung nach Anspruch 1 oder 2, **dadurch gekennzeichnet, dass** einerseits die IR-Heizstrahler (3) und andererseits die Presserollenanordnungen (6) jeweils über den halben Umfang der Kühlwalze (1) verteilt angeordnet sind.

4. Vorrichtung nach einem der Ansprüche 1-3, **dadurch gekennzeichnet, dass** über den Umfang der Kühlwalze (1) entlang der Seitenkanten des thermoplastischen Beschichtungsmaterials (2) Fixiervorrichtungen vorgesehen sind, welche den Seitenrand des thermoplastischen Beschichtungsmaterials (2) beim Umlauf um die Kühlwalze (1) fixieren.

5. Vorrichtung nach Anspruch 4, **dadurch gekennzeichnet, dass** die Fixiervorrichtungen als Kluppen oder Führungsbänder ausgeführt sind.

6. Vorrichtung nach einem der vorgenannten Ansprüche, **dadurch gekennzeichnet, dass** die Zuführeinrichtung (4a) für die Substratbahn (4) zusätzlich mit einer Klebstoffzuführung versehen ist.

## Claims

1. Method for continuously laminating a substrate with a thermoplastic coating material (2), comprising an IR heating device (3), by means of which a surface of the thermoplastic, film-shaped coating material (2) is melted, a cooling apparatus (1) which is opposite the IR heating apparatus (3) and actively cools the surface of the continuous thermoplastic coating material (2) that is opposite the molten surface, and at least one press-roller assembly (5), by means of which a continuous substrate web (4) and the continuous thermoplastic coating material (2) are pressed together to produce a hot-melt adhesive bond between the substrate web (4) and the thermoplastic coating material (2),
**characterized in that**
the cooling apparatus is designed as a rotatably driven cooling roller (1), over the circumference of which the following are arranged in succession, in the order given below:
- a feed apparatus (2a) for the thermoplastic coating material (2),
- one or more IR radiant heaters (3) for heating the surface of the thermoplastic coating material (2) resting on the cooling roller,
- a feed apparatus (4a) for the substrate web (4),
- one or more press-roller assemblies (5) for pressing the substrate web (4) against the molten surface of the thermoplastic coating material (2) resting on the cooling roller (1),
- and a removal apparatus (6a) for the laminated product (6).

2. Device according to claim 1, **characterized in that** the cooling roller (1) is provided with connections for supplying and discharging a fluid coolant.

3. Device according to claim 1 or 2, **characterized in that** the IR radiant heaters (3) and the press-roller assemblies (6) are each arranged so as to be distributed over one half of the circumference of the cooling roller (1).

4. Device according to any of claims 1-3, **characterized in that** fixing devices which fix the side border of the thermoplastic coating material (2) in position when it passes around the cooling roller (1) are provided over the circumference of the cooling roller (1) along the side edges of the thermoplastic coating material (2).

5. Device according to claim 4, **characterized in that** the fixing devices are designed as clips or guide belts.

6. Device according to any of the preceding claims, **characterized in that** the feed apparatus (4a) for the substrate web (4) is additionally provided with an adhesive feed.

## Revendications

1. Dispositif pour contrecoller en continu un matériau de revêtement thermoplastique (2) sur un substrat, comprenant un dispositif de chauffage IR (3), avec lequel une surface du matériau de revêtement thermoplastique (2) en forme de feuille est fondue, un moyen de refroidissement (1) opposé au moyen de chauffage IR (3), qui refroidit activement la surface du matériau de revêtement thermoplastique (2) continu opposée à la surface fondue, et au moins un agencement de rouleaux presseurs (5), avec lequel une bande de substrat (4) continue et le matériau de revêtement thermoplastique (2) continu sont pressés l'un contre l'autre pour générer une liaison par colle thermofusible entre la bande de substrat (4) et le matériau de revêtement thermoplastique (2),
**caractérisé en ce que**
le moyen de refroidissement est réalisé sous la forme d'un rouleau refroidisseur (1) entraîné en rotation, autour de la circonférence duquel sont disposés successivement dans l'ordre indiqué ci-dessous les éléments suivants :
- un moyen d'alimentation (2a) pour le matériau de revêtement thermoplastique (2),
- un ou plusieurs radiateurs IR (3) pour le réchauffement de la surface du matériau de revêtement thermoplastique (2) reposant sur le rouleau refroidisseur,
- un moyen d'alimentation (4a) pour la bande de substrat (4),
- un ou plusieurs agencements de rouleaux presseurs (5) pour presser la bande de substrat (4) contre la surface fondue du matériau de revêtement thermoplastique (2) reposant sur le rouleau refroidisseur (1),
- et un moyen d'enlèvement (6a) pour le produit contrecollé (6).

2. Dispositif selon la revendication 1, **caractérisé en ce que** le rouleau refroidisseur (1) est pourvu de raccordements pour l'amenée et l'évacuation d'un moyen de refroidissement fluide.

3. Dispositif selon la revendication 1 ou 2, **caractérisé en ce que** les radiateurs IR (3) d'un côté et les agencements de rouleaux presseurs (6) de l'autre côté sont disposés de manière répartie respectivement sur la moitié de la circonférence du rouleau refroidisseur (1).

4. Dispositif selon l'une des revendications 1 à 3, **caractérisé en ce que** des dispositifs de fixation sont prévus sur la circonférence du rouleau refroidisseur (1) le long des arêtes latérales du matériau de revêtement thermoplastique (2), lesdits dispositifs de fixation fixant le bord latéral du matériau de revêtement thermoplastique (2) lors de la révolution autour du rouleau refroidisseur (1).

5. Dispositif selon la revendication 4, **caractérisé en ce que** les dispositifs de fixation sont réalisés sous la forme de pinces ou de bandes de guidage.

6. Dispositif selon l'une des revendications précédentes, **caractérisé en ce que** le moyen d'alimentation (4a) pour la bande de substrat (4) est en outre pourvu d'une alimentation en colle.
